# EUROPEAN PATENT SPECIFICATION

(11) **EP 1 389 919 B1**
(45) Date of publication and mention of the grant of the patent: **17.01.2007**
(21) Application number: 02731049.9
(22) Date of filing: 03.05.2002
(51) Int. Cl.: A23D 7/015, A23L 1/10

(54) **VEGETABLE FAT EMULSION COMPRISING OAT PROTEIN**
PFLANZENFETTEMULSION ENTHALTEND HAFERPROTEIN
EMULSIONS DE GRAISSES VEGETALES CONTENANT PROTEINE D'AVOINE

(30) Priority: 08.05.2001 SE 0101588
(43) Date of publication of application: 25.02.2004
(73) Proprietor: Carlshamn Mejeri Produktion AB, 374 82 Karlshamn (SE)
(72) Inventor: LINGERUD, Cecilia, S-374 30 Karlshamn (SE); SVÄRD, Rigmor, S-295 91 Bromölla (SE); MARTELL, Birgit, S-294 31 Sölvesborg (SE)
(74) Representative: Henriksson, Dan Ragnar Mikael
(86) International application number: PCT/SE2002/000866
(87) International publication number: WO 2002/089594

(56) References cited:
- WO-A1-95/07628
- WO-A1-97/11141
- US-A- 5 858 441

## Description

The present invention relates to all vegetable fat-continuous emulsions, both in solid and liquid form, having excellent taste, good stability against oxidation as well as good stability at ordinary storage conditions also when having a low fat content. When used as spreads they have excellent organoleptic properties and good stability when being spread.

### BACKGROUND OF THE INVENTION

Many people are allergic to milk products, and thus are reduced to using fat emulsions, such as spreads or liquid fat emulsions, devoid of dairy products, usually vegetable margarines with a fat content of about 80% by weight.

Most of the low fat emulsions available today, however, contain ingredients of dairy origin, and thus are not suitable for milk allergic people.

There is also a growing part of the consumers, such as vegans, for which food derived from animal sources are not at all acceptable. Even very small amounts of ingredients of animal origin, such as the commonly used additive D vitamin, is unacceptable.

A recent concern among the consumers are also products of different animal origin. Ingredients belonging to this category is e.g. gelatin, which is a very common ingredient used as a gelling agent, protein source or thickener in low fat emulsions.

Also for these groups of consumers a too high intake of fat may be a problem.

Thus, there is a great need of an all vegetable fat emulsion. There is also a great need of an all vegetable fat emulsion having a low fat content.

A well known problem with low fat spreads is to obtain a stable product with good organoleptic properties. This has previously been obtained e.g. by incorporation of a gelling agent together with a small amount of a protein. Commonly used gelling agents are e.g. gelatin, alginate and gelling polysaccharides. Protein from dairy sources are very common due to inter alia the good taste, but also gelatin is sometimes used as the protein source.

EP 0 473 854 A1 discloses a plastic dispersion containing 5-65% by weight of fat, in which gelatin has been replaced by a gelling polysaccharide and which further includes a limited amount of protein and a viscosity enhancer. The gelling polysaccharide, protein and viscosity enhancer can all be obtained from non-animal sources. The only example of a vegetable protein is gelling soy protein.

EP 0 389 170 B1 relates to a lactoprotein-free fat spread with a fat content of 20-60% by weight which is said to have an excellent taste without the use of lactoprotein and high amounts of starch products, and with a long shelf life. This is attained by a combination of gelatin or agar-agar and a solubilized starch, particularly a starch rich in amylopectin having particularly good gel-forming properties.

### GENERAL DESCRIPTION OF THE INVENTION

An object of the present invention is to provide an all vegetable, fat-continuous emulsion having excellent taste, good stability against oxidation as well as good stability at ordinary storage conditions and, when used as a spread, excellent organoleptic properties and good stability when being spread.

Another object of the invention is to provide such an emulsion for use in baking and/or cooking having excellent baking and/or frying characteristics.

A further object of the invention is to provide such an emulsion having a reduced fat content or low fat content.

These objects are obtained by using a unique combination of a protein-containing oat base and a fractionated vegetable oil.

### DETAILED DESCRIPTION OF THE INVENTION

The invention provides an all vegetable fat-continuous emulsion, wherein the aqueous phase comprises a protein-containing oat base and the fat phase H comprises a fractionated vegetable oil.

The oat base is most preferably derived from enzymatically treated rolled oats. A preferred content of the oat base is such that H the protein content of the emulsion is 0.01-0.2 % by weight.

Preferably, the fractionated vegetable oil is derived from oats. In a preferred embodiment, the emulsion contains fractionated vegetable oil in an amount of 0.1-1.0 % by weight.

The emulsion according to the invention may be either solid or liquid, and the fat content may vary within wide limits, such as 20-80%. Thus, it is very surprising that the excellent characteristics can be obtained also at very low fat contents. Preferably, the fat content of the emulsion is 30-60%, and most preferably 35-40 %.

By choosing the components of the fat blend emulsions of different consistency can be obtained, such as liquid emulsions, so called frying margarines or spreads used for being spread on e.g. bread. The solid fat content is measured by NMR (IUPAC method 2.150a) and expressed as so called N values, that is percentage of solid fat in the blend, at different temperatures.

Preferably the fat blend has an N₁₀ of up to and inclusive 50 % by weight, an N₂₀ of up to and inclusive 30 % by weight, an N₃₀ of up to and inclusive 15 % by weight and an N₃₅ of up to and inclusive 0.5 % by weight. Thus, when the N value is zero the fat emulsion is liquid. For a so called frying margarine the fat blend has an N₁₀ of 15-40 % by weight, an N₂₀ of 10-23 % by weight, an N₃₀ of 3-10 % by weight and an N₃₅ of up to 5 % by weight. In a so called low fat spread the fat blend has an N₁₀ of 15-25 % by weight, an N₂₀ of 10-15 % by weight, an N₃₀ of 3-7 % by weight and an N₃₅ of up to 3 % by weight.

The fractionated vegetable oil is used as part of an emulsifying system in fat emulsions according to the invention of reduced or low fat content. In fat emulsions according to the invention having high fat contents, the fractionated oil also acts as an anti-spattering agent.

As a very suitable vegetable oil use is made of a fractionated oat oil which is rich in polar lipids, particularly in glycolipids, preferably containing 10-90 % by weight of polar lipids, preferably 20-75 %, the remainder being non-polar lipids. A method of obtaining such a fractionated vegetable oil, especially fractionated oat oil, can be found in WO 97/11141 (Scotia Lipid Teknik AB).

A further part of an emulsifier system used in emulsions of reduced or low fat contents is one or more monoglycerides and or diglycerides of a type usually used in low fat spreads, suitably in an amount of 0.1-5 % by weight.

The so called oat base is especially one which is rich in soluble fibre, most preferred one which is derived from enzymatically treated rolled oats. Preferably, the oat base contains degraded starch.

A specific preferred emulsion according to the invention is an all vegetable emulsion comprising 35-40% by weight of vegetable fat having an N₁₀ of 15-25 % by weight, an N₂₀ of 10-15 % by weight, an N₃₀ of 3-7 % by weight and an N₃₅ of up to 3 % by weight, 0.1-5 % by weight of monoglyceride and/or diglyceride, 0.01-0.2 % by weight of protein derived from enzymatically treated rolled oats and 0.1-1.0 % by weight of fractionated oat oil.

The spread according to the invention may comprise further ordinary ingredients used in spreads, provided they are of vegetable origin, such as salt and vitamins.

Thus, according to the invention there is provided an all vegetable fat-continuous emulsion which contains protein but which in spite of this is stable without the use of a stabilising agent or thickener. By using an oat derived protein, especially in form of dried enzymatically treated rolled oats, preferably in combination with a fractionated oat oil, a spread is obtained which is very tasty, has an excellent mouth feel/melting behaviour, is stable against oxidation and during storage and has a good behaviour when being spread.

The invention will now be disclosed in more detail by the following non-limiting examples.

### EXAMPLE 1

Spreads containing approximately 35 % by weight of a fat phase having the following compositions were prepared, samples nos. I, II and III being comparative examples, while sample no. IV is a product according to the invention.

| Sample no. | I | II | III | IV |
|---|---|---|---|---|
| Oil blend | 3420g | 3420g | 3420g | 3420g |
| Dimodan BP (from Danisco Cultor) | 30g | 30g | 30g | 30g |
| Fractionated oat oil | - | - | 30g | 30g |
| PGPR 90 (from Danisco Cultor) | 30g | 30g | - | - |
| β-carotene, 0.3% | 20g | 20g | 20g | 20g |
| | | | | |
| Water | 6340g | 6290g | 6340g | 6290g |
| NaCl | 150g | 150g | 150g | 150g |
| Oat base (11% protein) | - | 50g | - | 50g |
| Potassium sorbate | 10g | 10g | 10g | 10g |

The pH value of the aqueous phase was adjusted to 5.5 by citric acid or sodium bicarbonate.

The oil blend contained 58% rape seed oil, 8% palm oil, 8 % coconut oil and 20 % palmstearin interesterified with 6 % coconut oil, and had the following NMR values (method IUPAC 2.150a) : an N₁₀ of 21% by weight, an N₂₀ of 8.5 % by weight, an N₃₀ of 3.5 % by weight and an N₄₀ of < 0.5 % by weight.

The so called oat base was an enzymatically treated rolled oats product comprising 11 % protein, 69 % carbohydrates, 8 % total fibre, 4% β-glucan.

The fat phase was prepared by blending and heating the fat and fat soluble components to 45-50°C.

The aqueous phase was prepared by blending and heating the water and water soluble components to 45-50°C.

After pasteurisation the aqueous phase was added to the fat phase slowly and under agitation to form a w/o emulsion. The emulsion was pumped through two cooling A-units '(type Gerstenberg Perfector). The cooling was controlled so that the product was leaving the first A-unit at a temperature in the range of 14-17°C and the second A-unit at a temperature in the range of 11-14°C.

The final product was packaged in tubs.

After storage for 10-14 days at 10°C samples were tested by a taste panel, using a scale from 1 to 7, with the following result:

| Sample no. | I | II | III | IV |
|---|---|---|---|---|
| Thick mouthfeel | 4.4 | 3.3 | 3.8 | 3.0 |
| Rapid melting | 4.0 | 5.3 | 4.8 | 5.7 |
| Total melting | 4.2 | 5.7 | 5.1 | 6.2 |
| Rancid, old, metallic | 1.5 | 1.5 | 1.6 | 1.5 |
| Salty | 1.8 | 2.8 | 2.4 | 3.1 |
| Sourness | 1.4 | 1.8 | 1.8 | 2.3 |
| Bitterness | 1.4 | 1.4 | 1.6 | 1.7 |

The product according to the invention had less thick mouthfeel, melted more rapid in the mouth, had a better total melting behaviour, had a more salty taste and also higher sourness.

The samples were also tested regarding oxidation rate, with the following result (the respective values being calculated as Totox (2*peroxide value + anisidine value):

**Oxidation after 6 weeks storage:**

| Sample | I | II | III | IV |
|---|---|---|---|---|
| Totox | 3.8 | 3.4 | 3.1 | 1.7 |

**Appearance (scale 1 to 7):**

| | | | | |
|---|---|---|---|---|
| Yellow | 1 | 4 | 3 | 5 |
| Coarse structure | 1 | 2 | 2 | 4 |
| Shiny | 5 | 3 | 3 | 2 |

From the above it appears that the use of PGPR (polyglycerolpolyricinoleat, a commonly used emulsifier) (sample I) results in a stable product with bad melting behaviour and less taste feel regarding e.g. salt and sourness. By adding protein in the form of so called oat base these characteristics are improved (sample II). When fractionated oat oil is used in stead of PGPR also the melting behaviour and taste feel (sample III) are obtained.

The best product is obtained, however, when a combination according the present invention of so called oat base and fractionated oat oil is used (sample IV).

Also the appearance is affected by a more dense structure. Sample I has a very dense structure, it is also shiny and light yellow, almost white, in colour. Sample III is rather dense, less shiny than sample I and light yellow. Sample II is less dense, a bit dull and more yellow than sample III.

Sample IV, that is the product according to the invention, is rather coarse in structure, has a dull appearance and is yellow in colour, which results in a product having the most attractive appearance.

It is also apparent that the stable product containing PGPR is oxidising more rapidly than the product according to the invention.

### EXAMPLE 2

Spreads of a fat content of approximately 35% comprising different combinations of commonly used proteins, gelling agents and emulsifiers compared to a spread according to the invention comprising a combination of a so called oat base and fractionated oat oil but without a gelling agent were prepared using the same procedure as in Example 1. Samples V, VI, VII and VIII are comparative examples, while sample IX is an emulsion according to the invention.

| Sample | V | VI | VII | VIII | IX |
|---|---|---|---|---|---|
| Oil blend | 3.5 kg | 3.5 kg | 3.5 kg | 3.5 kg | 3.5 kg |
| Dimodan BP | 35 g | 35 g | 35 g | 35 g | 35 g |
| Soy lecithin | 35 g | 35 g | 35 g | 35 g | - |
| Fractionated oat oil | - | - | - | - | 35 g |
| β-carotene 0.3% | 20 g | 20 g | 20 g | 20 g | 20 g |
| Water | 6140 g | 5955 g | 6090 g | 6290 g | 6290 g |
| Salt | 150 g | 150 g | 150 g | 150 g | 150 g |
| Oat base | - | - | 50 g | 50 g | 50 g |
| Soy drink natural | - | 185 g | - | - | - |
| Na-alginate (LFS 200 from Danisco Cultor) | 200 g | 200 g | 200 g | - | - |
| Potassium sorbate | 10 g | 10 g | 10 g | 10 g | 10 g |

The pH value of the aqueous phase was adjusted to 5.5 by citric acid or sodium bicarbonate.

The same oil blend as in Example 1 was used.

The soy drink used in sample VI was the commercial product "TOFULINE NATURELL" (CARLSHAMN MEJERI AB) comprising 3 % by weight of protein.

Sample VIII was unstable, the final product being an o/w emulsion.

After storage for 10-14 days at 10°C samples were tested by a taste panel, using a scale from 1 to 7, with the following result:

| Sample no. | V | VI | VII | VIII | IX |
|---|---|---|---|---|---|
| Thick mouthfeel | 4.2 | 4.8 | 4.6 | - | 2.9 |
| Rapid melting | 4.5 | 3.8 | 3.6 | - | 5.2 |
| Total melting | 4.7 | 4.1 | 3.8 | - | 5.8 |
| Rancid, old, metallic | 1.6 | 1.5 | 1.4 | - | 1.5 |
| Salty | 2.5 | 2.4 | 2.3 | - | 2.9 |
| Sourness | 1.8 | 1.8 | 1.9 | - | 2.9 |
| Bitterness | 1.5 | 1.8 | 1.5 | - | 1.5 |

The samples were also tested regarding oxidation rate, with the following result:

**Oxidation after 6 weeks:**

| Sample | V | VI | VII | VIII | IX |
|---|---|---|---|---|---|
| Totox | 4.2 | 18.9 | 4.9 | - | 4.9 |

**Appearance (scale 1 to 7) :**

| | | | | | |
|---|---|---|---|---|---|
| Yellow | 5 | 5 | 5 | - | 5 |
| Coarse structure | 3 | 3 | 3 | - | 3 |
| Shiny | 2 | 2 | 2 | - | 2 |

From this comparative example it appears that the use of alginate, a known gelling agent used in low fat spreads, results in a product with a thick mouth feel and a bad melting behaviour.

The combination of soy lecithin and oat base (sample VIII) does not result in a w/o emulsion.

It also appears that the use of soy protein, a known protein source in vegetable margarines, in a low fat spread (sample VI) affects the oxidation in a negative way, in contrast to the oat protein used according to the invention.

In summary, the addition of a soy protein in a low fat spread (sample VI) results in a very rapid oxidation, which might be remedied by adding oat base in stead of the soy drink. This product (sample VII) has a thicker mouthfeel and worse total melting behaviour than sample V. Therefore the alginate (stabiliser) is deleted, but this results in an unstable product (o/w emulsion) (sample VIII). When the soy lecithin is replaced by the fractionated oat oil, the result is a spread (sample IX) with an excellent mouthfeel, good melting behaviour and a good oxidation pattern.

### EXAMPLE 3

Two products having high fat contents were prepared according to ordinary process conditions:

| Sample no. | X | XI |
|---|---|---|
| Fat blend | 7960 g | 6960 g |
| Soy lecithin | 40 g | - |
| Fractionated oat oil | - | 40 g |
| | | |
| Water | 750 g | 2769 g |
| Whey | 1100 g | - |
| Oat base (11 % protein) | - | 81 g |
| Salt | 150 g | 150 g |

pH 6.0

The oat base was the same as the one used in Example 1. The whey had a TS content of 4.8 % by weight and a protein content of 0.8 % by weight.

A spattering test (scale 1-5, 5 being the best) was performed as follows: A 60 g sample was placed on a thermostat-controlled roasting plate at 180°C. A paper was placed horizontally over the surface of the plate. After all water phase having left the product, an estimation of the extent of spattering over the paper was performed.

Furthermore, a frying-to-brown test (scale 1-7, 7 being the best) was performed according to the following: Slices of white unsweetened bread was fried to brown for 2 minutes on both sides at 185°C. Appearance and taste were estimated when the samples had attained the same temperature.

| Sample no. | X | XI |
|---|---|---|
| Spattering test | 2.7 | 2.6 |
| | | |
| Fry-to-brown test | | |
| appearance | 4.7 | 5.8 |
| taste | 5.2 | 5.3 |

From the above results it is shown that by using fractionated oat oil in stead of soy lecithin the fat content can be lowered from 80 % by weight to 70 % by weight without loosing in spattering and frying-to-brown performance.

## Claims

1. An all vegetable fat-continuous emulsion, wherein the aqueous phase comprises a protein-containing oat base and the fat phase comprises a fractionated vegetable oil.

2. An all vegetable emulsion according to claim 1, wherein said oat base is derived from enzymatically treated rolled oats.

3. An all vegetable emulsion according to any one of the preceding claims, wherein said oat base is present in an amount such that the protein content of the emulsion is 0.01-0.2 % by weight.

4. An all vegetable emulsion according to any one of the preceding claims, wherein the fractionated vegetable oil is fractionated oat oil.

5. An all vegetable emulsion according to any one of the preceding claims, wherein the fractionated oil is present in an amount of 0.1-1.0 % by weight.

6. An all vegetable emulsion according to any one of the preceding claims, wherein the fat content is 20-80 % by weight.

7. An all vegetable emulsion according to claim 6, wherein the fat content is 30-60 % by weight.

8. An all vegetable emulsion according to claim 7, wherein the fat content is 35-40 % by weight.

9. An all vegetable emulsion according to any one of the preceding claims, further comprising a monoglyceride and/or diglyceride as en emulsifying agent.

10. An all vegetable emulsion according to claim 9, wherein said emulsifying agent is present in an amount of 0.1-5 % by weight.

11. An all vegetable emulsion according to any one of the preceding claims, wherein the fat blend has an N₁₀ of up to 50 % by weight, an N₂₀ of up to 30 % by weight, an N₃₀ of up to 15 % by weight and an N₃₅ of up to 0.5 % by weight.

12. An all vegetable emulsion according to claim 11, wherein the fat blend has an N₁₀ of 15-40 % by weight, an N₂₀ of 10-23 % by weight, an N₃₀ of 3-10 % by weight and an N₃₅ of up to 5 % by weight.

13. An all vegetable emulsion according to claim 11, wherein the fat blend has an N₁₀ of 15-70 % by weight, an N₂₀ of 10-15 % by weight, an N₃₀ of 3-7 % by weight and an N₃₅ of up to 3 % by weight.

14. An all vegetable emulsion according to claim 1, comprising 35-40% by weight of vegetable fat having an N₁₀ of 15-25 % by weight, an N₂₀ of 10-15 % by weight, an N₃₀ of 3-7 % by weight and an N₃₅ of up to 3 % by weight, 0.1-5 % by weight of a monoglyceride and/or diglyceride, 0.01-0.2 % by weight of protein derived from enzymaticcally treated rolled oats and 0.1-1.0 % by weight of fractionated oat oil.

## Patentansprüche

1. Rein pflanzliche Emulsion mit kontinuierlicher Fettphase, wobei die wässrige Phase eine Protein enthaltende Haferbasis umfasst und die Fettphase ein fraktioniertes Pflanzenöl umfasst.

2. Rein pflanzliche Emulsion nach Anspruch 1, wobei die Haferbasis von enzymatisch behandeltem gewalzten Hafer stammt.

3. Rein pflanzliche Emulsion nach einem der vorigen Ansprüche, wobei die Haferbasis in einer solchen Menge vorhanden ist, dass der Proteingehalt der Emulsion 0,01-0.2 Gewichts-% beträgt.

4. Rein pflanzliche Emulsion nach einem der vorigen Ansprüche, wobei das fraktionierte Pflanzenöl fraktioniertes Haferöl ist.

5. Rein pflanzliche Emulsion nach einem der vorigen Ansprüche, wobei das fraktionierte Öl in einer Menge von 0,1-1,0 Gewichts-%, vorhanden ist.

6. Rein pflanzliche Emulsion nach einem der vorigen Ansprüche, wobei der Fettgehalt 20-80 Gewichts-% beträgt

7. Rein pflanzliche Emulsion nach Anspruch 6, wobei der Fettgehalt 30-60 Gewichts-% beträgt.

8. Rein pflanzliche Emulsion nach Anspruch 7, wobei der Fettgehalt 35-40 Gewichts-% beträgt.

9. Rein pflanzliche Emulsion nach einem der vorigen Ansprüche, weiterhin umfassend ein Monoglycerid und/oder Diglycerid als Emulgator.

10. Rein pflanzliche Emulsion nach Anspruch 9, wobei der Emulgator in einer Menge von 0,1-5 Gewichts-% vorhanden ist.

11. Rein pflanzliche Emulsion nach einem der vorigen Ansprüche, wobei das Fettgemisch einen N₁₀ von bis zu 50 Gewichts-%, einen N₂₀ von bis zu 30 Gewichts-%, einen N₃₀ von bis zu 15 Gewichts-% und einen N₃₅ von bis zu 0,5 Gewichts-% besitzt.

12. Rein pflanzliche Emulsion nach Anspruch 11, wobei das Fettgemisch einen N₁₀. von 15-40 Gewichts-%, einen N₂₀ von 10-23 einen N₃₀ von 3-10 Gewichts-% und einen N₃₅ von bis zu 5 Gewichts-% besitzt.

13. Rein pflanzliche Emulsion nach Anspruch 11, wobei das Fettgemisch einen N₁₀ von 15-70 Gewichts-%, einen N₂₀ von 10-15 Gewichts-%, einen N₃₀ von 3-7 Gewichts-% und einen N₃₅ von bis zu 3 Gewichts-% besitzt.

14. Rein pflanzliche Emulsion nach Anspruch 1, umfassend 35-40 Gewichts-% an Pflanzenfett mit einem von 15-25 Gewichts-%, einem N₂₀ von 10-15 Gewichts-%, einem N₃₀ von 3-7 Gewichts-% und einem N₃₅ von bis zu 3 Gewichts-% 0,1-5 Gewichts-% eines Monoglycerids und/oder Diglycerids, 0,01-0,2 Gewichts-% an Protein, das von enzymatisch behandeltem gewalzten Hafer stammt, und 0,1-1,0 Gewichts-% an fraktioniertem Haferöl.

## Revendications

1. Emulsion continue de graisses entièrement végétales, où la phase aqueuse comprend une base d'avoine contenant des protéines et la phase grasse comprend une huile végétale fractionnée.

2. Emulsion entièrement végétale selon la revendication 1 où ladite base d'avoine est dérivée d'avoine cylindrée traitée enzymatiquement.

3. Emulsion entièrement végétale selon l'une quelconque des revendications précédentes où ladite base d'avoine est présente en une quantité telle que la teneur en protéines de l'émulsion est 0,01-0,2 % en masse.

4. Emulsion entièrement végétale selon l'une quelconque des revendications précédentes où l'huile végétale fractionnée est de l'huile d'avoine fractionnée.

5. Emulsion entièrement végétale selon l'une quelconque des revendications précédentes où l'huile fractionnée est présente en une quantité de 0,1-1,0 % en masse.

6. Emulsion entièrement végétale selon l'une quelconque des revendications précédentes où la teneur en graisses est 20-80 % en masse.

7. Emulsion entièrement végétale selon la revendication 6 où la teneur en graisses est 30-60 % en masse.

8. Emulsion entièrement végétale selon la revendication 7 où la teneur en graisses est 35-40 % en masse.

9. Emulsion entièrement végétale selon l'une quelconque des revendications précédentes comprenant en outre un monoglycéride et/ou un diglycéride comme agent émulsifiant.

10. Emulsion entièrement végétale selon la revendication 9 où ledit agent émulsifiant est présent en une quantité de 0,1-5 % en masse.

11. Emulsion entièrement végétale selon l'une quelconque des revendications précédentes où le mélange de graisses a un N₁₀ pouvant attendre 50 % en masse, un N₂₀ pouvant atteindre 30 % en masse, un N₃₀ pouvant atteindre 15 % en masse et un N₃₅ pouvant atteindre 0,5 % en masse.

12. Emulsion entièrement végétale selon la revendication 1 où le mélange de graisses a un N₁₀ de 15-40 % en masse, un N₂₀ de 10-23 % en masse, un N₃₀ de 3-10 % en masse et un N₃₅ pouvant atteindre 5 % en masse.

13. Emulsion entièrement végétale selon la revendication 11 où le mélange de graisses a un N₁₀ de 15-70 % en masse, un N₂₀ de 10-15 % en masse, un N₃₀ de 3-7 % en masse et un N₃₅ pouvant atteindre 3 % en masse.

14. Emulsion entièrement végétale selon la revendication 1 comprenant 35-40 % en masse de graisses végétales ayant un N₁₀ de 15-25 % en masse, un N₂₀ de 10-15 % en masse, un N₃₀ de 3-7 % en masse et un N₃₅ pouvant atteindre 3 % en masse, 0,1-5 % en masse d'un monoglycéride et/ou d'un diglycéride, 0,01-0,2 % en masse de protéines dérivées d'avoine cylindrée traitée enzymatiquement et 0,1-1,0 % en masse d'huile d'avoine fractionnée.
